(19) **Europäisches Patentamt**
**European Patent Office**
**Office européen des brevets**

(11) **EP 0 970 595 B2**

(12) **NEUE EUROPÄISCHE PATENTSCHRIFT**

(45) Veröffentlichungstag und Bekanntmachung des Hinweises auf die Entscheidung über den Einspruch:
**25.04.2007 Patentblatt 2007/17**

(45) Hinweis auf die Patenterteilung:
**16.04.2003 Patentblatt 2003/16**

(21) Anmeldenummer: **99112635.0**

(22) Anmeldetag: **02.07.1999**

(51) Int Cl.:
***A01B 79/00*** *(2006.01)*

(54) **Vorrichtung und Verfahren zur Bestimmung einer virtuellen Position**

Device and method for assessing a virtual position

Dispositif et procédé pour déterminer une position virtuelle

(84) Benannte Vertragsstaaten:
**BE DE DK FR GB IT**

(30) Priorität: **10.07.1998 DE 19830858**

(43) Veröffentlichungstag der Anmeldung:
**12.01.2000 Patentblatt 2000/02**

(73) Patentinhaber: **CLAAS Selbstfahrende Erntemaschinen GmbH**
**33428 Harsewinkel (DE)**

(72) Erfinder: **Quincke, Gunnar**
**59494 Soest (DE)**

(56) Entgegenhaltungen:
**EP-A- 0 821 296**      **EP-A- 0 845 198**
**WO-A-95/16228**       **WO-A-98/21930**
**AU-A- 4 441 797**     **DE-A- 19 528 663**
**DE-A- 19 544 112**

**Beschreibung**

Die Erfindung bezieht sich auf ein landwirtschaftliches Fahrzeug oder Arbeitsgerät mit einer Satel-litenempfangseinheit zur Positionsbestimmung und auf ein Verfahren zur Positionsbestimmung nach dem Oberbegriff des Ansprüche 1 und 13.

Der Einsatz von Satellitennavigationssystemen, wie beispielsweise des Global Positioning System (GPS) ist bei landwirtschaftlichen Fahrzeugen oder bei Arbeitsgeräten bereits für die Erstellung von Erntekatastern und Bodenhöhenprofilen sowie für die Kontrolle der Düngemittelausbringung bekannt. Dabei sind mittlerweile Satellitennavigationssysteme (DGPS) mit entsprechend leistungsfähigen Auswerteeinheiten verfügbar, die eine Genauigkeit der Positionsbestimmung, d.h. der Bestimmung der Position einer GPS-Antenne, im Zentimeterbereich erreichen.

So ist beispielsweise aus der DE 196 47 523 ein landwirtschaftliches Fahrzeug mit einem Satellitennavigationssystem bekannt. Das dort beschriebene Fahrzeug weist ein Bearbeitungsgerät auf, wobei dort vorgeschlagen wird, die Position eines Referenzpunktes an dem Bearbeitungsgerät zu bestimmen anstatt beispielsweise der Position des Fahrzeugmittelpunktes. Hierbei gibt es jedoch ein Problem, wenn die Satellitenempfangseinheit (GPS-Antenne) aus bestimmten Gründen nicht an dem Referenzpunkt des Bearbeitungsgerätes angebracht werden kann. Gründe für den Umstand, daß die GPS-Antenne nicht direkt an den Ort, dessen Position eigentlich zu bestimmen ist, angebracht werden kann, sind beispielsweise mangelnde mechanische Anbringungsmöglichkeiten, Abschattung der Signale durch das Fahrzeug selbst, die Gefahr von Beschädigungen oder starkem Verschleiß. In diesen Fällen ist der Referenzpunkt, dessen Position bestimmt werden soll, räumlich von der GPS-Antenne, dessen Position tatsächlich mit dem Satellitennavigationssystem bestimmt wird, in einem Abstand (D) entfernt. Dies macht ejne Koordinatenumrechnung erforderlich; d.h. aus den jeweils mittels der Satellitennavigation bestimmten Koordinaten der GPS-Antenne, die sich beispielsweise auf dem Fahrzeugdach befindet, muß durch Umrechnung auf die Koordinaten des zum Beispiel tieferliegenden Referenzpunktes an dem Bearbeitungsgerät geschlossen werden. Für den Fall, daß das Bearbeitungsgerät starr mit dem Fahrzeug verbunden ist, erhält man aus der DE 196 47 523 den Hinweis für die Bestimmung der Höhenkoordinate (Z) des Referenzpunktes jeweils die Höhendifferenz zwischen dem Anbringungsort der GPS-Antenne und dem Referenzpunkt von der mittels Satellitennavigation ermittelten Z-Koordinate des Anbringungsortes der GPS-Antenne für die Umrechnung zu subtrahieren. Für den Fall, daß das Bearbeitungsgerät nicht starr mit dem Fahrzeug verbunden ist, sondern beispielsweise höhenverstellbar an diesem angeordnet ist, erhält man aus der DE 196 47 523 den Hinweis, einen Sensor vorzusehen, der die Höhenänderung des Bearbeitungsgerätes gegenüber dem Fahrzeug mißt, und diese gemessene Höhenänderung in die oben beschriebene Koordinatenbestimmung als Korrektur einfließen zu lassen.

Darüber hinaus gibt es jedoch ein generelles Problem der Positionsbestimmung, wenn der Ort (Referenzpunkt), dessen Position zu bestimmen ist, nicht mit dem Anbringungsort der GPS-Antenne zusammenfällt, sondern zwischen beiden ein Abstand (D) besteht. Und zwar gibt es eine Unbestimmtheit, die daher rührt, daß prinzipiell alle Punkte auf der Oberfläche einer Kugel mit Radius (D), in deren Mittelpunkt sich der Anbringungsort der GPS-Antenne befindet, als mögliche Position des Referenzpunktes in Betracht kommen. Da der Abstand (D) zwischen dem Referenzpunkt und der GPS-Antenne bei einem landwirtschaftlichen Fahrzeug durchaus mehrere Meter betragen kann, ergibt sich eine entsprechend große Unbestimmtheit in der Positionsbestimmung des Referenzpunktes, die angesichts immer genauerer Navigationssystemen an sich sehr unbefriedigend ist.

Zwar läßt sich während der Fahrt aus den zeitlich aufeinanderfolgenden Positionskoordinaten der GPS-Antenne iterativ die Fahrtrichtung und die Orientierung des Fahrzeuges ermitteln, jedoch ist diese Methode ungenau und versagt bei einem stehenden Fahrzeug sowie beim Anfahren aus dem Stand. Desweiteren stimmt die Fahrtrichtung bei einigen Anwendungen (zum Beispiel beim Fahren im Hundegang oder am Hang) mit der Fahrzeuglängsrichtung nicht überein.

Nur wenn man Einschränkungen der Bewegungsfreiheit - beispielsweise nur Fahrten in N-S und/oder in O-W-Richtung oder nur Fahrten in der Horizontalebene - machen würde, ließe sich diese Unbestimmtheit vermeiden Dies ist jedoch bei landwirtschaftlichen Fahrzeugen und daran angehängten Arbeitsgeräten nicht möglich.

Es ist daher die Aufgabe der Erfindung, die genaue Bestimmung eines Referenzpunktes, der räumlich vom Anbringungsort der Navigationsantenne entfernt ist, zuverlässig zu ermöglichen.

Diese Aufgabe wird erfindungsgemäß durch die kennzeichnenden Merkmale des Patentansprüche 1 und 13 gelöst.

Erfindungsgemäß weist das landwirtschaftliche Fahrzeug mindestens einen Sensor (S,S1,S2,S3) zur Bestimmung der Lage des Fahrzeuges auf. Dabei bedeutet Lage die Ausrichtung des Fahrzeuges und die Orientierung in der Horizontalebene des terrestrischen Bezugssystems (x,y,z), wobei Ausrichtung den Winkel ($\varphi$) meint, den die Fahr-zeuglängsrichtung beispielsweise mit der N-S-Richtung (y-Koordinate des terrestrischen Bezugssystems) bildet und Orientierung die Richtung meint, zu der beispielsweise die Fahrzeugvorderseite zeigt. Die Lage des Fahrzeuges bedeutet aber auch die Längs- bzw. Querneigung ($\alpha$, $\beta$) des Fahrzeuges relativ zur Vertikalrichtung (Z-Koordinate) des Bezugssystems. Die Koordinaten der GPS-Antenne werden mit ($X_A, Y_A, Z_A$) bezeichnet; die Koordinaten des Referenzpunktes mit ($X_P, Y_P, Z_P$).

Als Sensor zur Bestimmung der Ausrichtung ($\varphi$) des Fahrzeuges in der Horizontalebene wird vorzugsweise ein dem Fachmann bekannter mechanischer Kreiselkompaß oder ein Laserkreisel verwendet. Als Sensoren für die Längs- bzw. Querneigung ($\alpha, \beta$) werden vorzugsweise Lotpendel mit elektrischen Signalgebern verwendet, die dem Fachmann ebenfalls bekannt sind. Der Fachmann kann sich auch eines einzigen Sensors bedienen, der in der Lage ist, die verschiedenen Abweichungen ($\varphi, \alpha, \beta$) zu detektieren.

Ferner sind erfindungsgemäß fahrzeugspezifische Basisumrechnungsgrößen ($X_{P0}-X_{A0}$; $Y_{P0}-Y_{A0}$; $Z_{P0}-Z_{A0}$; $\varphi_0$; $\alpha_0$; $\beta_0$; $d_1$; $d_2$; $d_3$) vorgesehen, die die geometrischen Verhältnisse der Anordnung von Referenzpunkt und GPS-Antenne an dem Fahrzeug für eine bestimmte, ausgerichtete Lage des Fahrzeuges widerspiegeln. Als ausgerichtete Lage des Fahrzeuges wird vorzugsweise diejenige gewählt, wo die Längsrichtung des Fahrzeuges in N-S-Richtung mit Frontseite nach Norden ausgerichtet ist und wo es keine Längs- bzw. Querneigung des Fahrzeuges gibt, d.h. für die ausgezeichnete Lage wird angenommen, daß das Fahrzeug auf einem ebenen, in keiner Richtung geneigten Feld steht. Diese Basisumrechnungsgrößen sind quasi Teil einer Fahrzeugspezifikation.

Dabei ist im einzelnen:

- ($X_{P0}-X_{A0}$) die Differenz der x-Koordinaten von Referenzpunkt und Ort der GPS-Antenne,
- ($Y_{P0}-Y_{A0}$) die entsprechende Differenz der y-Koordinaten,
- ($Z_{P0}-Z_{A0}$) die entsprechende Differenz der z-Koordinaten,
- $d_1$ die Projektion des Abstandes (D; Strecke vom Ort der GPS-Antenne zum Referenzpunkt) auf die Horizontalebene (x,y) des Bezugssystems,
- $d_2$ die Projektion des Abstands (D; Strecke vom Ort der GPS-Antenne zum Referenzpunkt) auf die y,z-Ebene des Bezugssystems,
- $d_3$ die Projektion des Abstandes (D; Strecke vom Ort der GPS-Antenne zum Referenzpunkt) auf die Horizontalebene x,z-Ebene des Bezugssystems,
- $\varphi_0$ den Winkel zwischen $d_1$ und der N-S-Richtung (x-Richtung),
- $\alpha_0$ den Winkel zwischen $d_2$ und der Vertikalen des Bezugssystems (z-Richtung),
- $\beta_0$ den Winkel zwischen $d_3$ und der Vertikalen des Bezugssystems (z-Richtung).

Zur Veranschaulichung kann beispielsweise für das landwirtschaftliche Fahrzeug ein fiktives und bezogen auf das Fahrzeug festes kartesisches Koordinatensystem definiert werden. Die Achsen dieses Koordinatensystems sind mit (bx, by, bz) bezeichnet. Der Koordinatenursprung (Nullpunkt) dieses Koordinatensystems wird an den Ort der GPS-Antenne gelegt. Dabei ist entscheidend, daß dieses Koordinatensystem fest mit dem Fahrzeug verbunden ist, d.h. daß für dieses Koordinatensystem alle horizontalen und vertikalen Ortsänderungen sowie alle Drehungen und Neigungen des Fahrzeuges gelten.

In der ausgerichteten Lage ist:

- die Koordinatenachse (bx) dieses Koordinatensystems parallel zur W-O-Richtung (x-Koordinatenachse des terrestrischen Bezugssystems),
- die Koordinatenachse (by) dieses Koordinatensystems parallel zur N-S-Richtung (y-Koordinatenachse des terrestrischen Bezugssystems),
- die Koordinatenachse (bz) dieses Koordinatensystems parallel zur Vertikalen (z-Koordinatenachse des terrestrischen Bezugssystems).

Die fahrzeugspezifischen Basisumrechnungsgrößen ($X_{P0}-X_{A0}$; $Y_{P0}-Y_{A0}$; $Z_{P0}-Z_{A0}$; $\varphi_0$; $\alpha_0$; $\beta_0$, $d_1$, $d_2$, $d_3$) sind in einem Speicher der Auswerteeinheit oder in einem anderen Speicher des Fahrzeuges, auf den die Auswerteeinheit Zugriff hat, abspeicherbar.

Erfindungsgemäß detektieren nun der beziehungsweise die Sensoren jeweils eine Abweichung ($\varphi$, $\alpha$, $\beta$) der Fahrzeuglage von der ausgerichteten Lage, die oben ausführlich beschrieben ist. Die Auswerteeinheit (AWE) ermittelt nun anhand dieser Abweichungen ($\varphi$, $\alpha$, $\beta$) und unter Berücksichtigung der fahrzeugspezifischen Basisumrechnungsgrößen ($\varphi_0$, $\alpha_0$, $\beta_0$, $d_1$, $d_2$, $d_3$) jeweils die aktuelle Umrechnungsgröße für die Bestimmung der Koordinaten ($X_P$, $Y_P$, $Z_P$) des räumlich von der Satelliten-Empfangseinheit beabstandeten Referenzpunktes aus den bekannten Positionskoordinaten ($X_A$, $Y_A$, $Z_A$) der Satellitenempfangseinheit (GPS-Antenne).

Die Bestimmung der absoluten Position für den Ort der GPS-Antenne erfolgt durch einen an sich bekannten Rechenalgorithmus, der die Sendedaten von GPS-Satelliten verarbeitet. Dies ist dem Fachmann bekannt und kann mit hinreichender Genauigkeit erfolgen. Die Satelliten-Empfangseinheit (GPS-Antenne) kann bereits eine Auswerteeinheit umfassen, die aus den GPS-Sendedaten bereits Positionsdaten für den Ort der GPS-Antenne ermittelt, aus denen dann in dieser Auswerteeinheit oder in einer separaten Auswerteeinheit in erfindungsgemäßer Weise die Position des Referenzpunktes bestimmt wird. Es liegt jedoch auch im Rahmen der Erfindung, wenn nur eine Auswerteeinheit vorgesehen ist, die nicht unmittelbar zur Satelliten-Empfangseinheit gehört, wobei auch die GPS-Sendedaten zur Positionsbestimmung des Ortes der GPS-Antenne an diese Auswerteeinheit geleitet werden.

In einer bevorzugten Ausführungsform der Erfindung wird aus den jeweils erfindungsgemäß bestimmten Umrechnungsgrößen eine Transformationsmatrix berechnet und mit dieser Transformationsmatrix aus dem bekannten Positionsvektor $(X_A, Y_A, Z_A)$ der GPS-Antenne der zu bestimmende Positionsvektor $(X_P, Y_P, Z_P)$ des Referenzpunktes ermittelt.

Die Relevanz der vorliegenden Erfindung soll an dem konkreten Beispiel eines Mähdreschers veranschaulicht werden, der in S-N-Richtung einen um (15%, $\alpha = 8,5\,°$) geneigten Hang hoch fährt. Die fahrzeugspezifischen Basisumrechnungen bezogen auf die ausgerichtete Lage (wie oben erläutert) des Mähdreschers seien: GPS-Antenne auf dem Dach des Mähdreschers in 4 m Höhe über dem Boden, Referenzpunkt am Schneidwerk und zwar 1 m über dem Boden, d.h. $\Delta Z0 = -3m$, desweiteren $\Delta X0 = -3,5m$ und $\Delta Y0 = -5m$.

Ohne die erfindungsgemäße Berücksichtigung der Hangneigung würde beispielsweise gemäß der DE 196 47 523 lediglich die sich ändernde Position der GPS-Antenne gemessen und zur Positionsbestimmung des Referenzpunktes von der sich ändernden z-Koordinate der GPS-Antenne stets $\Delta Z0 = 3m$ subtrahiert sowie zu der sich ändernden y-Koordinate der GPS-Antenne stets $\Delta Y0 = 5m$ addiert. Dies entspricht jedoch nicht der Wirklichkeit; tatsächlich sind die Differenzbeträge abhängig von der Hangneigung. In diesem Fall müßte zur genauen Bestimmung des Referenzpunktes von der z-Koordinate der GPS-Antenne ein Differenzbetrag von $\Delta Z = 2,23$ m und von der y-Koordinate der GPS-Antenne ein Differenzbetrag von $\Delta Y = 5,39$ m subtrahiert werden. Damit weicht die Positionsbestimmung nach dem Stand der Technik für die z-Koordinate um 77 cm und für die y-Koordinate um 39 cm von dem tatsächlichen Wert ab. Diese Abweichungen sind größer als die Ungenauigkeit der Satellitennavigation an sich.

Eine ausführliche Herleitung dieser Größen wird nachfolgend unter Bezugnahme auf die Zeichnungen gegeben.

Die Erfindung ermöglicht die genaue Positionsbestimmung eines räumlich von der GPS-Antenne beabstandeten Referenzpunktes und zwar für die verschiedensten Lagen eines landwirtschaftlichen Fahrzeuges oder Arbeitsgerätes im terrestrischen Bezugssystem. Damit lassen sich Erntekataster und Bodenhöhenprofile deutlich besser erstellen.

Eine besondere Verbesserung erbringt die Erfindung auch für automatische Lenkungssysteme, so daß zum Beispiel ein Mähdrescher automatisch an einer virtuellen Getreidekante entlang gelenkt werden kann. Die virtuelle Getreidekante wird aus zuvor aufgezeichneten Referenzpositionsdaten abgeleitet und mit der ermittelten, aktuelle Referenzposition der Schneidwerkskante verglichen. Aus den Abweichungen der Fahrzeugrichtung und dem Referenzpunktabstand wird ein Stellsignal für das automatische Lenksystem ermittelt.

Die Erfindung bringt einen weiteren Vorteil für die Steuerung von Verteilgeräten, die zur Ausbringung von Mitteln, beispielsweise Spritz- oder Düngemittel, auf Felder geeignet sind. Mit Hilfe der virtuellen Position kann sehr einfach eine automatische Arbeitsbreitenregelung aufgebaut werden. Die Positionsdaten der Schlaggrenzen oder von Schlagbereichen, die nicht mit Mitteln versorgt werden sollen, werden heute vor dem Ausbringen der Mittel entsprechend dem Arbeitsprozeß vorbereitet und in die Arbeitsgerätesteuerung übertragen. Wird der Referenzpunkt erfindungsgemäß an die Stelle der äußersten Ausbringungsposition gelegt, so kann die Arbeitsbreite beim Überschreiten des Referenzpunktes über die gespeicherten Schlaggrenzen entsprechend verringert und dem Schlaggrenzenverlauf automatisch dynamisch angepaßt werden. Durch das Aufzeichnen der Referenzpunkte kann auch hier eine virtuelle Bearbeitungskante aufgezeichnet werden, an welcher ein Fahrzeug, anhand der aktuellen Arbeitsbreite, bei der nächsten Entlangfahrt automatisch entlang gesteuert werden kann. Legt man weitere Referenzpunkte, beispielsweise in Arbeitsrichtung, an den Beginn beziehungsweise an das Ende des Ausbringungsbereichs, so kann auf einfache Weise ein Ein- beziehungsweise Ausschalten des Arbeitsgerätes realisiert werden.

Die Erfindung kann auch vorteilhaft an landwirtschaftlichen Gerätekombinationen, wie Zugfahrzeuge mit einem von der Satellitenempfangsantenne richtungs- beziehungsweise neigungsentkoppelten Arbeitsgerätes, wie beispielsweise ein angehängter gezogener Düngersteuer oder einer Spritze, eingesetzt werden. Auf den Arbeitsgeräten sind dann zusätzliche eigene Neigungs- beziehungsweise Richtungssensoren angebaut, die die Ausrichtung des Arbeitsgerätes vorteilhaft auf den Koppelpunkt mit dem Zugfahrzeug ermitteln. Der Basisabstand (D) des virtuellen Referenzpunktes von der Empfangsantenne setzt sich dann aus einzelnen Teilabständen, die spezifisch für das jeweilige Arbeitsgerät und der Zugmaschine sind, zusammen und lassen sich in vorteilhafterweise über einen definierten Koppelpunkt zwischen Zugmaschine und Arbeitsgerät berechnen.

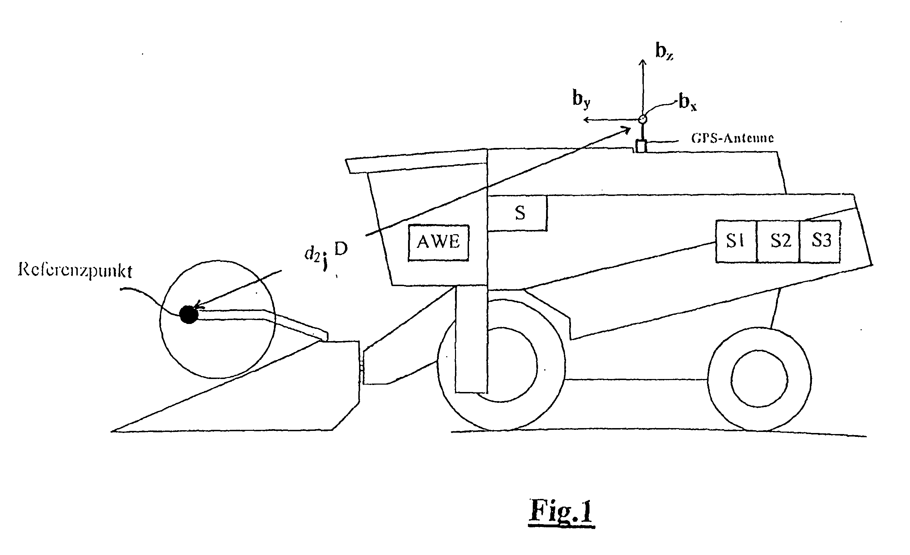

Anhand der beigefügten Zeichnung soll die Erfindung nachfolgend näher erläutert werden wobei eine Ausführung nach den Figuren 1-7 nicht unter die unabhängigen Ansprüchen 1-13 fällt. Es zeigt:

Fig. 1     die Seitenansicht eines Mähdreschers mit GPS-Antenne auf dem Dach und angebautem Schneidwerk, an dem sich der Referenzpunkt befindet,

Fig.2     eine schematische Draufsicht auf die Horizontalebene mit einem Mähdrescher, ausgerichtet Nullage mit der Längsrichtung nach Norden,

Fig.3     wie Fig.2, jedoch ist der Mähdrescher gegenüber der ausgerichteten Lage auf der Horizontalebene verdreht,

Fig.4     eine schematische Seitenansicht mit dem Mähdrescher in der yz-Ebene in einer ausgerichteten Nullage,

Fig.5     wie Fig.4, jedoch ist der Mähdrescher gegenüber der ausgerichteten Lage in der yz-Ebene verdreht,

Fig.6      eine schematische Seitenansicht mit dem Mähdrescher der xz-Ebene in einer ausgerichteten Nullage,

Fig.7      wie Fig.6, jedoch ist der Mähdrescher gegenüber der ausgezeichneten Lage in der xz-Ebene verdreht,

Fig.8      eine schematische Draufsicht auf einen Mähdrescher mit einer vor dem Schneidwerk liegenden virtuellen Arbeitsfläche,

Fig.9      eine Seitenansicht eines Mähdreschers mit vor dem Schneidwerk liegendem virtuellen Referenzpunkt,

Fig.10      wie in Fig.9, mit weiter vor dem Schneidwerk liegendem Referenzpunkt,

Fig.11      eine schematische Draufsicht auf einen Traktor mit über die Dreipunktaufhängung angebautem Düngerstreuer und zwei virtuellen Referenzpunkten,

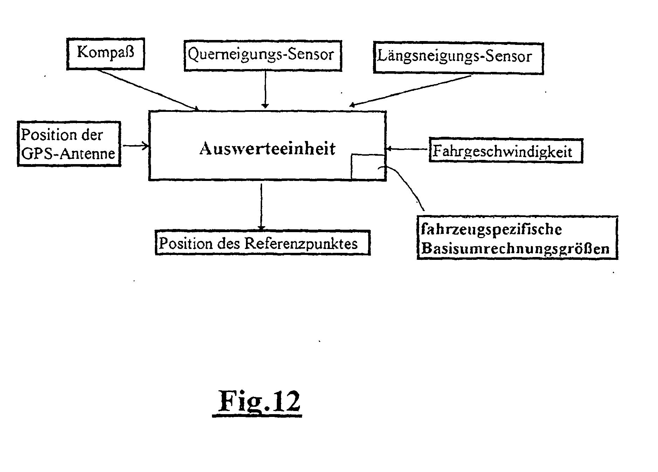

Fig.12      ein Blockdiagramm mit der Auswerteeinheit und den verschiedenen Sensoren.

In Fig. ist ein Mähdrescher mit angehängtem Schneidwerk gezeigt. Die GPS-Antenne befindet sich auf dem Dach des Mähdreschers in ca. 4 m Höhe. Der Referenzpunkt ist hier an die Außenseite des Schneidwerkes in eine Höhe von 1m gelegt. Diese Seitenansicht zeigt den Mähdrescher in der yz-Ebene des terrestrischen Koordinatensystems. Eingezeichnet ist auch das fiktive, mit dem Mähdrescher fest verbundene Koordinatensystem (bx, by, bz). Der Abstand zwischen dem Ort der GPS-Antenne und dem Referenzpunkt ist mit dem Bezugszeichen (D) bezeichnet. In dieser Seitenansicht ist jedoch nur die Projektion ($d_2$) der Abstandslinie (D) auf die yz-Ebene darstellbar.

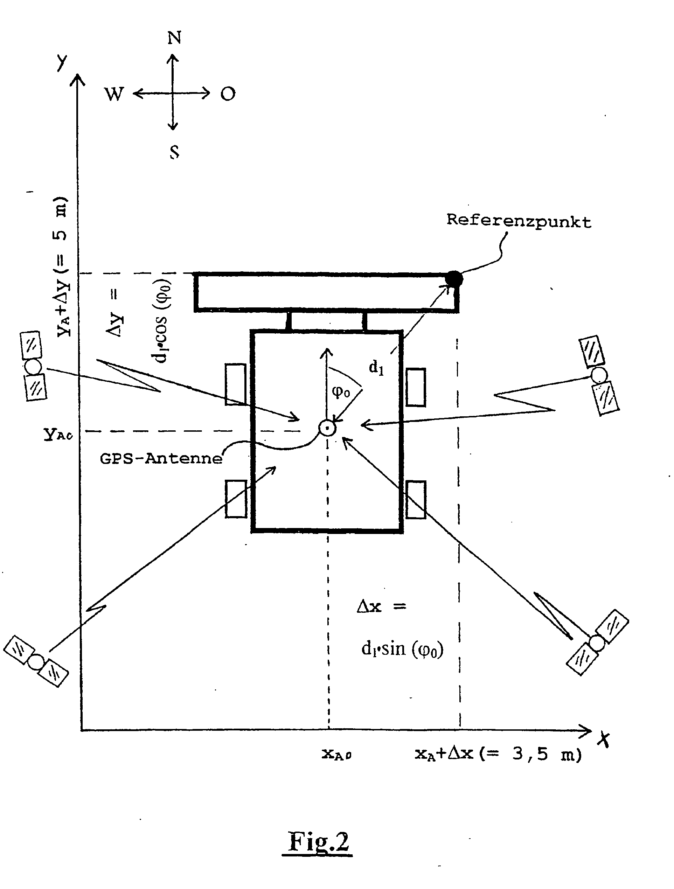

In den Figuren 2, 4, 6 ist der Mähdrescher jeweils in einer ausgerichteten Nullage in den zugehörigen Ebene gezeigt. Die Darstellungen sind schematisch und nicht maßstabsgetreu.

Fig.2 zeigt die Draufsicht auf einen Mähdrescher in einer ausgerichteten Nullage. Die GPS-Antenne befindet sich auf dem Dach des Mähdreschers. Zur Veranschaulichung sind auch vier GPS-Satelliten, von denen die GPS-Antenne Satellitennavigationssignale empfangen kann, eingezeichnet. Die gezeichnete Lage ist so gewählt, daß die Fahrzeuglängsrichtung parallel zur N-S-Richtung (y-Koordinate) ist und das Schneidwerk nach Norden ausgerichtet ist. Selbstverständlich kann im Rahmen der Erfindung auch eine andere ausgerichtete Lage gewählt werden. Die Wahl dieser Lage zur einfachen Bestimmung der fahrzeugspezifischen Basisumrechnungsgrößen ist lediglich eine Konvention. Allerdings sollte die ausgerichtete Lage unter Berücksichtigung von Konventionen des eingesetzten Satellitennavigationssystems so gewählt werden, daß die Bestimmung der Basisumrechnungsgrößen möglichst einfach ist. Die Basisumrechnungsgrößen werden als "fahrzeugspezifisch" bezeichnet, da sie, wenn die ausgerichtete Lage durch Konvention einmal festgelegt ist, durch den Ort der GPS-Antenne am Fahrzeug und die gewünschte Position des Referenzpunktes für diese "fahrzeugspezifische" Konstellation eindeutig bestimmbar sind. Die Bestimmung der Basisumrechnungsgrößen kann durch Ausmessen und/oder mathematische Berechnungen erfolgen.

Bei dem in Fig. gezeigten Beispiel ist die Differenz ($X_{P0}-X_{A0}$) zwischen der x-Koordinate des Referenzpunktes und der x-Koordinate der GPS-Antenne gleich 3,5 m; die Differenz ($Y_{P0}-Y_{A0}$) zwischen der y-Koordinate des Referenzpunktes und der y-Koordinate der GPS-Antenne ist gleich 5 m.

$d_1$ ist die Projektion der Abstandslinie (D) zwischen GPS-Antenne und Referenzpunkt auf die Horizontalebene (x,y). Dasselbe gilt auch für $d_2$ und $d_3$ bezüglich der jeweiligen Ebenen.

$$D = \sqrt{(3,5^2 + 5^2 + 3^2)m^2} = 6,8m$$

$$d_1 = \sqrt{(3,5^2 + 5^2)m^2} = 6,1m$$

$\varphi_0$ bezeichnet den Winkel zwischen $d_1$ und der N-S-Richtung/Fahrzeuglängsrichtung.

$\varphi_0$ bestimmt sich aus:

$$\tan(\varphi_0) = \tan(3,5/5) \Rightarrow \varphi_0 = 35^0.$$

$\varphi_0$ und $d_1$ können ebenso wie $\alpha_0$, $\beta_0$, $d_2$ und $d_3$ als fahrzeugspezifische Basisumrechnungsgrößen verwendet werden.

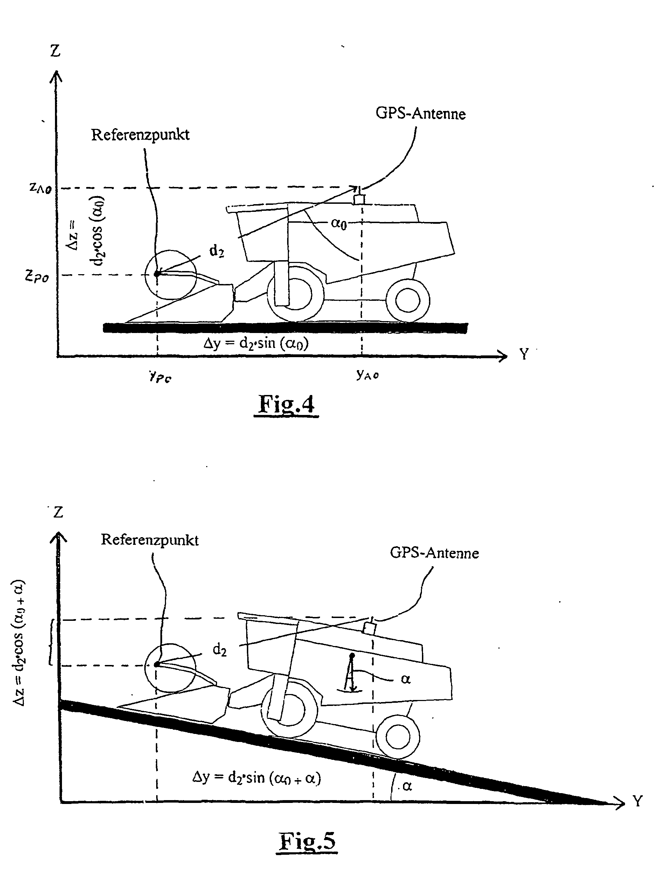

Fig.4 zeigt die Seitenansicht (yz-Ebene) des Mähdrescher in der ausgerichteten Lage. Die GPS-Antenne befindet sich auf dem Dach des Mähdreschers in 4 m Höhe, der Referenzpunkt am Schneidwerk in 1 m Höhe. Die Differenz ($Y_{P0}-Y_{A0}$) zwischen der y-Koordinate des Referenzpunktes und der y-Koordinate der GPS-Antenne ist, wie bereits aus Fig. 2 ersichtlich, gleich 5 m; die Differenz ($Z_{P0}-Z_{A0}$) zwischen der z-Koordinate des Referenzpunktes und der z-Koordinate der GPS-Antenne ist gleich -3 m.

$$d_2 = \sqrt{(3^2 + 5^2)m^2} = 5,83m$$

$\alpha_0$ bezeichnet den Winkel zwischen $d_2$ und der Vertikalen/z-Richtung
$\alpha_0$ bestimmt sich aus:

$$\tan(\alpha_0) = \tan(5/3) \Rightarrow \alpha_0 = 59°.$$

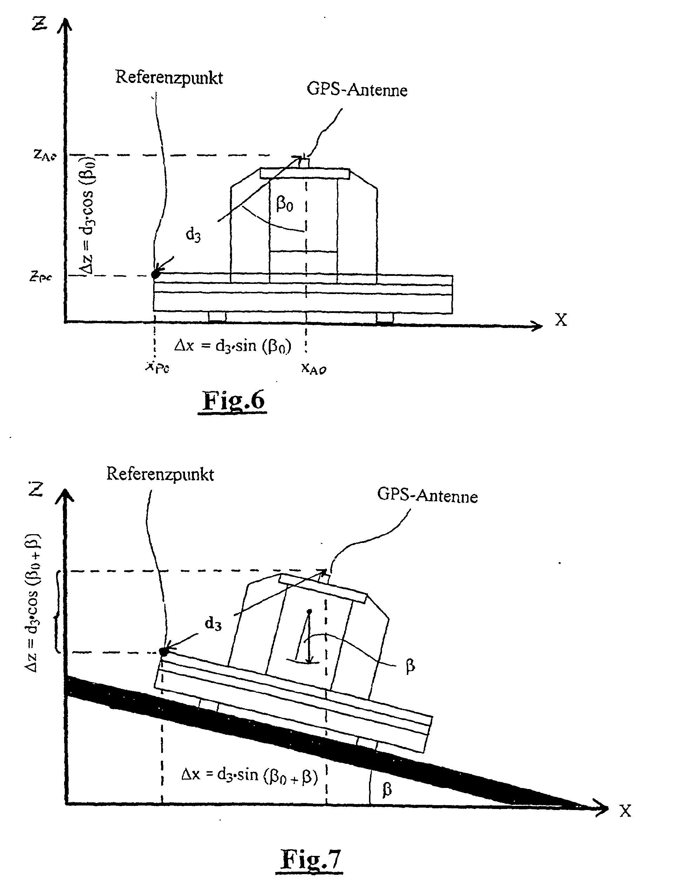

Fig.6 zeigt die Seitenansicht (x,z-Ebene) des Mähdrescher in der ausgerichteten Lage. Die GPS-Antenne befindet sich auf dem Dach des Mähdreschers in 4 m Höhe, der Referenzpunkt am Schneidwerk in 1 m Höhe. Die Differenz $(X_{P0}-X_{A0})$ zwischen der x-Koordinate des Referenzpunktes und der x-Koordinate der GPS-Antenne ist, wie bereits aus Fig. 2 ersichtlich, gleich 3,5 m; die Differenz $(Z_{P0}-Z_{A0})$ zwischen der z-Koordinate des Referenzpunktes und der z-Koordinate der GPS-Antenne ist gleich -3 m.

$$d_3 = \sqrt{(3^2 + 3,5^2)m^2} = 4,61m$$

$\beta_0$ bezeichnet den Winkel zwischen $d_3$ und der Vertikalen/z-Richtung.
$\beta_0$ bestimmt sich aus:

$$\tan(\alpha_0) = \tan(3,5/3) \Rightarrow \beta_0 = 59^0.$$

Während des Einsatzes des Mähdreschers werden die Abweichungen $(\varphi, \alpha, \beta)$ gemessen und erfindungsgemäß unter Verwendung der vorstehend beschriebenen Basisumrechnungsgrößen jeweils aktuelle Umrechnungsgrößen für die Bestimmung des Referenzpunktes ermittelt.

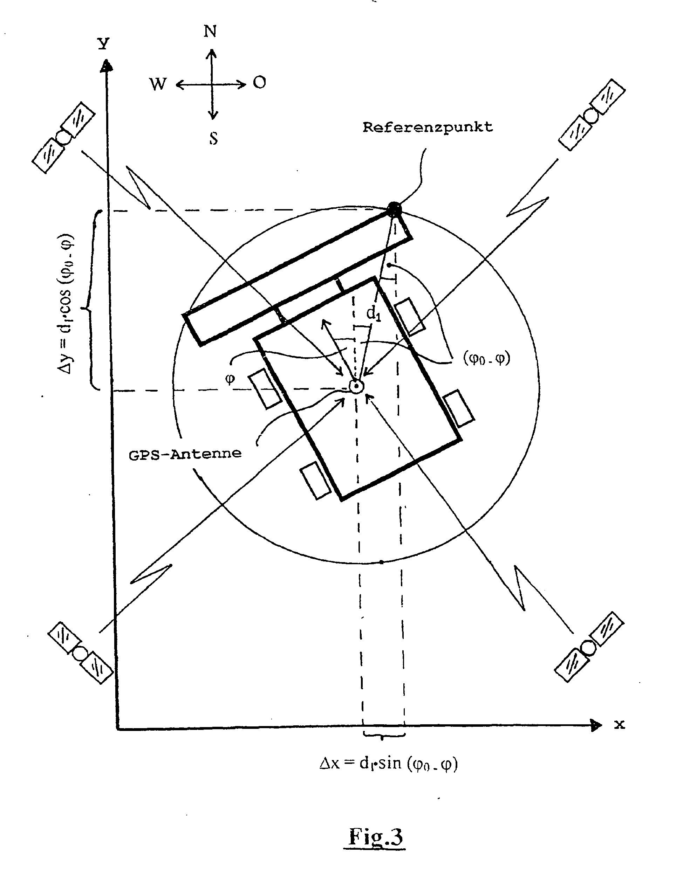

Fig. 3 zeigt die Draufsicht auf einen Mähdrescher abweichend von der ausgerichteten Nulllage auf einem ebenem Feld. Die entsprechenden Umrechnungsgrößen sind:

$$\Delta X = d_1 \sin(\varphi_0 - \varphi)$$

und

$$\Delta Y = d_1 \cos(\varphi_0 - \varphi).$$

Fig. 5 zeigt eine Seitenansicht eines Mähdreschers abweichend von der ausgerichteten Nulllage, welcher einen Hang in S-N- Richtung herauffährt. Die entsprechenden Umrechnungsgrößen sind:

$$\Delta Y = d_2 \sin(\alpha_0 + \alpha)$$

und

$$\Delta Z = d_2 \cos(\alpha_0 + \alpha).$$

Bei einem Hang mit 15% Steigung ($\alpha = 8,5°$) ergeben sich dann die einleitend angegebenen Werte:

$$\Delta Y = 5{,}39 \; m$$

und

$$\Delta Z = 2{,}23 \; m.$$

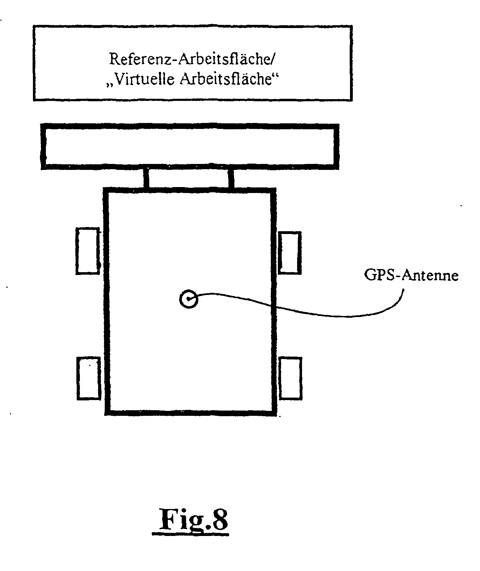

Fig.7 zeigt eine Frontansicht eines Mähdreschers abweichend von der ausgerichteten Nullage in S-N- Richtung, welcher entlang eines Hanges in O-W-Richtung geneigt ist. Die entsprechenden Umrechnungsgrößen sind:

$$\Delta X = d_3 \; \sin \, (\beta_0 + \beta)$$

und

$$\Delta Z = d_3 \; \cos \, (\beta_0 + \beta).$$

Nachfolgend werden die oben beschriebenen Beispiele in der Vektor- und Matrizenschreibweise, die aus der Mathematik bekannt ist, dargestellt.

Allgemeine Koordinatentransformation:

Bestimmung für den Positionsvektors ($X_P$, $Y_P$, $Z_P$) des Referenzpunktes aus dem Positionsvektor ($X_A$, $Y_A$, $Z_A$) der GPS-Antenne und der Transformationsmatrix mit dem Matrixelementen ($a_{ij}$) sowie dem Einheitsvektor (1,1,1) im kartesischen, terrestrischen Koordinatensystem:

$$\begin{bmatrix} X_p \\ Y_p \\ Z_p \end{bmatrix} = \begin{bmatrix} X_A \\ Y_A \\ Z_A \end{bmatrix} + \begin{bmatrix} a_{11} & a_{12} & a_{13} \\ a_{21} & a_{22} & a_{23} \\ a_{31} & a_{32} & a_{33} \end{bmatrix} \begin{bmatrix} 1 \\ 1 \\ 1 \end{bmatrix}$$

$$\begin{bmatrix} X_p \\ Y_p \\ Z_p \end{bmatrix} = \begin{bmatrix} X_A + a_{11} + a_{12} + a_{13} \\ Y_A + a_{21} + a_{22} + a_{23} \\ Z_A + a_{31} + a_{32} + a_{33} \end{bmatrix}$$

Koordinatentransformation für die ausgezeichnete Lage (N-S-Ausrichtung, keine Neigung):

$$\begin{bmatrix} X_p \\ Y_p \\ Z_p \end{bmatrix} = \begin{bmatrix} X_A + 3,5 \\ Y_A + 5 \\ Z_A - 3 \end{bmatrix}$$

Fahrt in der Horizontalebene (vgl. Fig.3):

$$\begin{bmatrix} X_p \\ Y_p \\ Z_p \end{bmatrix} = \begin{bmatrix} X_A \\ Y_A \\ Z_A \end{bmatrix} + \begin{bmatrix} d_1\sin(\varphi_0 - \varphi) & 0 & 0 \\ 0 & d_1\cos(\varphi_0 - \varphi) & 0 \\ 0 & 0 & -3 \end{bmatrix}\begin{bmatrix} 1 \\ 1 \\ 1 \end{bmatrix}$$

$$\begin{bmatrix} X_p \\ Y_p \\ Z_p \end{bmatrix} = \begin{bmatrix} X_A + d_1\sin(\varphi_0 - \varphi) \\ Y_A + d_1\cos(\varphi_0 - \varphi) \\ Z_A - 3 \end{bmatrix}$$

Fahrt in N-S-Richtung bei einer Hangneigung in Fahrtrichtung (vgl. Fig.5):

$$\begin{bmatrix} X_p \\ Y_p \\ Z_p \end{bmatrix} = \begin{bmatrix} X_A \\ Y_A \\ Z_A \end{bmatrix} + \begin{bmatrix} 3,5 & 0 & 0 \\ 0 & d_2\sin(\alpha_0 + \alpha) & 0 \\ 0 & 0 & -d_2\cos(\alpha_0 + \alpha) \end{bmatrix}\begin{bmatrix} 1 \\ 1 \\ 1 \end{bmatrix}$$

$$\begin{bmatrix} X_p \\ Y_p \\ Z_p \end{bmatrix} = \begin{bmatrix} X_A + 3,5 \\ Y_A + d_2\sin(\alpha_0 + \alpha) \\ Z_A - d_2\cos(\alpha_0 + \alpha) \end{bmatrix}$$

Fahrt in N-S-Richtung bei einer Hangneigung quer zur Längsrichtung des Fahrzeuges (vgl. Fig. 7):

$$\begin{bmatrix} X_p \\ Y_p \\ Z_p \end{bmatrix} = \begin{bmatrix} X_A \\ Y_A \\ Z_A \end{bmatrix} + \begin{bmatrix} d_3\sin(\beta_0 + \beta) & 0 & 0 \\ 0 & 5 & 0 \\ 0 & 0 & -d_3\cos(\beta_0 + \beta) \end{bmatrix}\begin{bmatrix} 1 \\ 1 \\ 1 \end{bmatrix}$$

$$\begin{bmatrix} X_p \\ Y_p \\ Z_p \end{bmatrix} = \begin{bmatrix} X_A + d_3\sin(\beta_0 + \beta) \\ Y_A + 5 \\ Z_A - d_3\cos(\beta_0 + \beta) \end{bmatrix}$$

Die Erfindung ist, wie schon oben erwähnt, nicht auf die Bestimmung eines Referenzpunktes beschränkt.

Vielmehr können durchaus zwei oder mehrere Referenzpunkte vorgesehen sein. Desweiteren es ist vorgesehen, daß der beziehungsweise die Referenzpunkte als virtuelle Bezugspunkte außerhalb des Fahrzeuges und außerhalb des Bearbeitungsgerätes liegen.

Ferner ist es auch vorgesehen, daß erfindungsgemäß eine aus zwei oder mehreren Referenzpunkten bestehende Referenzlinie, Referenzfläche oder ein Referenzvolumen bestimmbar ist.

In Fig. 8 ist eine solche virtuelle Referenzfläche vor dem Schneidwerk gezeigt.

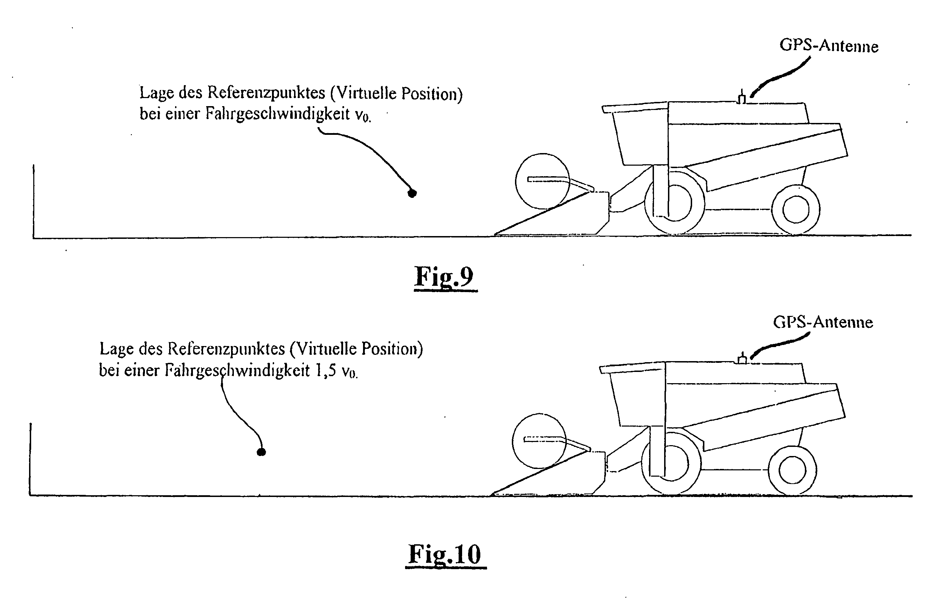

Darüber hinaus ist es bei einer Ausführungsform der Erfindung vorgesehen, daß die Auswerteeinheit (AWE) bei der Bestimmung eines virtuellen Referenzpunktes mindestens eine Parameter des Fahrzeugs wie beispielsweise die Fahrgeschwindigkeit berücksichtigt, so daß die Lage des virtuellen Referenzpunktes relativ zur Satelliten-Empfangseinheit (GPS-Antenne) in Abhängigkeit von mindestens einem Parameter dynamisch regelbar ist. Dies ist anhand der Fahrgeschwindigkeit in den Fig. 9 und 10 dargestellt. Bei einer höheren Fahrgeschwindigkeit kann man so quasi weiter vorausschauend fahren.

Darüber hinaus ist es vorgesehen, daß jeweils, wenn der in Fahrtrichtung vorausliegende Referenzpunkt das Feldende erreicht hat (was zum Beispiel durch Vergleich mit einem gespeicherten Feldkataster bestimmt werden kann), mit einer einstellbaren Zeitverzögerung bestimmte Vorgänge (z.B. Schneidwerk anheben, Pflug anheben und wenden) automatisch ausgelöst werden.

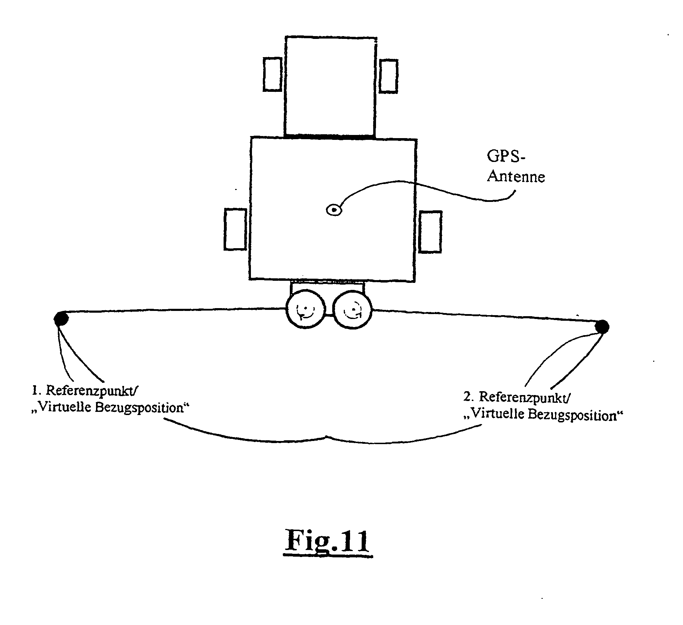

Ferner ist es vorgesehen, daß mindestens ein Lageparameter (relativer Knickwinkel des Anhängers zum Zugfahrzeug, relative Höhe der Dreipunktanhängung, relativer Einzugskanalwinkel, und andere) eines am Fahrzeug angebrachten Bearbeitungsgerätes von der Auswerteeinheit (AWE) berücksichtigt wird, so daß die Lage des virtuellen Referenzpunktes zur der Satelliten-Empfangseinheit (GPS-Antenne) in Abhängigkeit von diesem Lageparameter dynamisch regelbar ist. In Fig.11 ist beispielsweise ein Traktor mit einem Düngerstreuer gezeigt. Dabei ist es vorgesehen, die Lage des virtuellen Referenzpunktes von der Rotationsgeschwindigkeit des Streutellers beziehungsweise der Arbeitsbreite des Streuers abhängig zu machen, so daß der Referenzpunkt jeweils am Rand des Streubereiches liegt. Damit die theoretische Arbeitsbreite noch besser ermittelt werden kann, werden auch die Lageparameter der Dreipunktanhängung mit bei der Berechnung des Referenzpunktes berücksichtigt.

Bei einem Düngerstreuer mit mehreren Streutellern können bei Bedarf mehrere korrespondierende Referenzpunkte existieren, wobei einzelne Referenzpunkte von dem Bediener des Fahrzeuges deaktivierbar und wieder aktivierbar sind. Was in dem gezeichneten Fall der beiden Streuteller durchaus sinnvoll ist, wenn zum Beispiel bei Fahrten am Feldrand die Drehzahl des randseitigen Streutellers zuerst verringert und dann abgeschaltet wird, wobei dann auch eine Positionsbestimmung des korrespondierenden Referenzpunktes überflüssig und eventuell sogar störend wird. Durch die Einbeziehung von weiteren Parametern aus dem Arbeitsprozeß, wie beispielsweise der Fahrgeschwindigkeit oder von düngerspezifischen Größen, kann die Arbeitsbreite des Steuers so gesteuert werden, daß selbst die Flugdauer des Streugutes (beispielsweise zur Auswahl des richtigen Einschalt- bzw. Ausschaltmomentes des Ausbringgerätes) mit berücksichtigt wird.

Die Erfindung ist hier anhand eines Mähdreschers und eines angehängten Düngerstreuers beschrieben worden. Es ist für den Fachmann jedoch auch offensichtlich, daß sie auch in anderen Nutzfahrzeugen, wie Baumaschinen, die eine Bodenkontur bearbeiten beziehungsweise umgestalten und auch auf einfache angehängte Arbeitsgeräte, die ihre eigene Navigationseinrichtung besitzen, anwendbar ist.

**Patentansprüche**

1.     a. Landwirtschaftliches Fahrzeug oder Arbeitsgerät mit einer Satelliten-Empfangseinheit zur Positionsbestimmung im dreidimensionalen terrestrischen Bezugssystem,

    b. wobei das landwirtschaftliche Fahrzeug oder Arbeitsgerät eine Auswerteeinheit (AWE) aufweist, die aus den von der Satelliten-Empfangseinheit empfangenen Daten die absolute Position mindestens eines räumlich vom Ort der Satelliten-Empfangseinheit getrennten Referenzpunktes bestimmt,

    c. wobei der räumliche Abstand (D) zwischen der Satelliten-Empfangseinheit und dem Referenzpunkt betragsmäßig bekannt ist,

    d. wobei mindestens ein Sensor (S, S1, S2, S3) zur Bestimmung der Lage des Fahrzeugs - d.h. Ausrichtung und Orientierung des Fahrzeugs in der Horizontalebene des terrestrischen Bezugssystems und/oder der Längs - bzw. Querneigung des Fahrzeuges relativ zur Vertikalrichtung des Bezugssystems - vorgesehen ist,

    e. wobei in einem Speicher der Auswerteeinheit (AWE) oder einem anderen auf dem Fahrzeug oder Arbeitsgerät angeordneten Speicher für eine bestimmte, ausgezeichnete Lage des Fahrzeugs - vorzugsweise Längsrichtung des Fahrzeuges in N-S Richtung mit Frontseite nach Norden und ohne Längsbeziehungsweise Querneigung des Fahrzeuges - mindestens eine fahrzeugspezifische Basisumrechnungsgröße ($X_{PO} - X_{AO}$, $Y_{PO} - Y_{AO}$, $Z_{PO} - Z_{AO}$, $\varphi_O$, $\alpha_O$, $\beta_O$, $d_1$, $d_2$, $d_3$) abspeicherbar ist

    f. und wobei der (die) Sensor (en) mindestens eine Abweichung ($\varphi$, $\alpha$, $\beta$) der Lage von der ausgerichteten Nulllage detektiert (en),

**dadurch gekennzeichnet, das**

g. von der Auswerteeinheit (AWE) anhand dieser Abweichung ($\varphi$, $\alpha$, $\beta$) und unter Berücksichtigung mindestens einer fahrzeugspezifischen Basisumrechnungsgröße ($\varphi_O$, $\alpha_O$, $\beta_O$, $d_1$, $d_2$, $d_3$) jeweils die aktuelle Umrechnungsgröße für die Bestimmung der Koordinaten ($X_P$, $Y_P$, $Z_P$) des räumlich von der Satelliten-Empfangseinheit beabstandeten Referenzpunktes aus den bekannten Positionskoordinaten ($X_A$, $Y_A$, $Z_A$) der Satelliten-Empfangseinheit ermittelt wird und wobei

h. der Referenzpunkt als virtueller Bezugspunkt außerhalb des Fahrzeugs und außerhalb des Bearbeitungsgerätes liegt.

2. Landwirtschaftliches Fahrzeug oder Arbeitsgerät nach Anspruch 1,
**dadurch gekennzeichnet,**
**daß** die Auswerteeinheit (AWE) aus den Umrechnungsgrößen eine Transformationsmatrix ermittelt und mit dieser Transformationsmatrix aus dem bekannten Positionsvektor ($X_A$, $Y_A$, $Z_A$) der Satelliten-Empfangseinheit den Positionsvektor ($X_P$, $Y_P$, $Z_P$) des Referenzpunktes ermittelt.

3. Landwirtschaftliches Fahrzeug oder Arbeitsgerät nach mindestens einem der Ansprüche 1 und 2,
**dadurch gekennzeichnet,**
**daß** ein Richtungssensor, wie beispielsweise ein Kompaß, als Sensor (S1) zur Bestimmung der Ausrichtung ($\varphi$) des Fahrzeuges in der Horizontalebene des terrestrischen Bezugssystems vorgesehen ist.

4. Landwirtschaftliches Fahrzeug oder Arbeitsgerät nach mindestens einem der vorstehenden Ansprüche,
**dadurch gekennzeichnet,**
**daß** ein Neigungssensor, wie beispielsweise ein Lotpendel mit elektrischem Signalgeber, als Sensor (S2) zur Bestimmung der Längsneigung ($\alpha$) des Fahrzeuges relativ zur Vertikalrichtung des terrestrischen Bezugssystems vorgesehen ist.

5. Landwirtschaftliches Fahrzeug oder Arbeitsgerät nach mindestens einem der vorstehenden Ansprüche,
**dadurch gekennzeichnet,**
**daß** ein Neigungssensor, wie beispielsweise ein Lotpendel mit elektrischem Signalgeber, als Sensor (S3) zur Bestimmung der Querneigung ($\beta$) des Fahrzeuges relativ zur Vertikalrichtung des terrestrischen Bezugssystems vorgesehen ist.

6. Landwirtschaftliches Fahrzeug oder Arbeitsgerät nach mindestens einem der Ansprüche 1 und 2,
**dadurch gekennzeichnet,**
**daß** ein Sensor (S) zur Bestimmung der Ausrichtung ($\varphi$) des Fahrzeuges in der Horizontalebene des terrestrischen Bezugssystems sowie zur Bestimmung der Längsneigung ($\alpha$) beziehungsweise der Querneigung ($\beta$) des Fahrzeuges relativ zur Vertikalrichtung des terrestrischen Bezugssystems vorgesehen ist.

7. Landwirtschaftliches Fahrzeug oder Arbeitsgerät nach einem der vorstehenden Ansprüche,
**dadurch gekennzeichnet,**
**daß** eine aus zwei oder mehreren Referenzpunkten bestehende Referenzlinie bestimmbar ist.

8. Landwirtschaftliches Fahrzeug oder Arbeitsgerät nach einem der vorstehenden Ansprüche,
**dadurch gekennzeichnet,**
**daß** eine aus drei oder mehreren Referenzpunkten bestehende Referenzfläche bestimmbar ist.

9. Landwirtschaftliches Fahrzeug oder Arbeitsgerät nach einem der vorstehenden Ansprüche,
**dadurch gekennzeichnet,**
**daß** ein aus drei oder mehreren Referenzpunkten bestehendes Referenzvolumen bestimmbar ist.

10. Landwirtschaftliches Fahrzeug oder Arbeitsgerät nach einem der vorstehenden Ansprüche,
**dadurch gekennzeichnet,**
**daß** mindestens ein Arbeitsparameter eines am Fahrzeug angebrachten oder gezogenen Arbeitsgerätes von der Auswerteeinheit (AWE) berücksichtigt wird, so daß die Lage des virtuellen Referenzpunktes zur der Satelliten-Empfangseinheit in Abhängigkeit von diesem Arbeitsparameter berechenbar ist.

11. Landwirtschaftliches Fahrzeug oder Arbeitsgerät nach einem der vorstehenden Ansprüche,

**dadurch gekennzeichnet,**
**daß** die Auswerteeinheit (AWE) die Fahrgeschwindigkeit des Fahrzeuges bei der Bestimmung eines virtuellen Referenzpunktes berücksichtigt, so daß die Lage des virtuellen Referenzpunktes relativ zur Satelliten-Empfangseinheit in Abhängigkeit von der Fahrgeschwindigkeit dynamisch regelbar ist.

**12.** Landwirtschaftliches Fahrzeug oder Arbeitsgerät nach einem der vorstehenden Ansprüche,
**dadurch gekennzeichnet,**
**daß** einzelne Referenzpunkte von dem Bediener des Fahrzeuges oder automatisch vom Arbeitsprozeß deaktivierbar beziehungsweise aktivierbar sind.

**13.** a. Verfahren zur Positionsbestimmung für ein landwirtschaftliches Fahrzeug oder Arbeitsgerät, dass eine Satelliten-Empfangseinheit zur Positionsbestimmung im dreidimensionalen terrestrischen Bezugssystem aufweist,
b. wobei das landwirtschaftliche Fahrzeug oder Arbeitsgerät eine Auswerteeinheit (AWE) aufweist, die aus den von der Satelliten-Empfangseinheit empfangenen Daten die absolute Position mindestens eines räumlich vom Ort der Satelliten-Empfangseinheit getrennten Referenzpunktes bestimmt,
c. wobei der räumliche Abstand (D) zwischen der Satelliten-Empfangseinheit und dem Referenzpunkt betragsmäßig bekannt ist,
d. wobei von mindestens einem Sensor (S, S1, S2, S3) die Lage des Fahrzeugs oder des Arbeitsgerätes - d.h. Ausrichtung und Orientierung des Fahrzeugs in der Horizontalebene des terrestrischen Bezugssystems und Längs - bzw. Querneigung des Fahrzeuges relativ zur Vertikalrichtung des Bezugssystems - bestimmt wird,
e. wobei in einem Speicher der Auswerteeinheit (AWE) oder einem anderen auf dem Fahrzeug angeordneten Speicher für eine bestimmte, ausgerichtete Lage des Fahrzeugs - vorzugsweise Längsrichtung des Fahrzeuges in N-S Richtung mit Frontseite nach Norden und keine Längs- beziehungsweise Querneigung des Fahrzeuges - fahrzeugspezifische Basisumrechnungsgröße ($X_{PO}$- $X_{AO}$ , $Y_{PO}$ - $Y_{AO}$, $Z_{PO}$ - $Z_{AO}$ , $\varphi_O$, $\alpha_O$, $\beta_O$, $d_1$, $d_2$, $d_3$) abgespeichert werden und
f. wobei der (die) Sensor (en) eine Abweichung ($\varphi$, $\alpha$, $\beta$) der Lage von der ausgerichteten Nulllage detektiert (en),
**dadurch gekennzeichnet**, **das**
g. von der Auswerteeinheit (AWE) anhand dieser Abweichung ($\varphi$, $\alpha$, $\beta$) und unter Berücksichtigung der fahrzeugspezifischen Basisumrechnungsgröße ($\varphi_O$, $\alpha_O$, $\beta_O$, $d_1$, $d_2$, $d_3$) jeweils die aktuelle Umrechnungsgröße ermittelt wird für die Bestimmung der Koordinaten ($X_P$, $Y_P$, $Z_P$) des räumlich von der Satelliten-Empfangseinheit beabstandeten Referenzpunktes aus den bekannten Positionskoordinaten ($X_A$, $Y_A$, $Z_A$) der Satelliten-Empfangseinheit und wobei
h. der Referenzpunkt als virtueller Bezugspunkt außerhalb des Fahrzeugs und außerhalb des Bearbeitungsgerätes liegt.

**14.** Verfahren zur Positionsbestimmung für ein landwirtschaftliches Fahrzeug oder Arbeitsgerätes nach Anspruch 13,
**dadurch gekennzeichnet,**
**daß** die Auswerteeinheit (AWE) aus den Umrechnungsgrößen eine Transformationsmatrix ermittelt und mit dieser Transformationsmatrix aus dem bekannten Positionsvektor ($X_A$, $Y_A$, $Z_A$) der Satelliten-Empfangseinheit den Positionsvektor ($X_P$, $Y_P$, $Z_P$) des Referenzpunktes bestimmt.

**Claims**

**1.** An agricultural vehicle or working implement having a satellite receiving unit for determining position in the three-dimensional terrestrial reference system, wherein the agricultural vehicle or working implement has an evaluation unit (AWE) which, from the data received from the satellite receiving unit, determines the absolute position of at least one reference point which is spatially separated from the location of the satellite receiving unit, wherein the spatial distance (D) between the satellite receiving unit and the reference point is quantitatively known,
wherein there is provided at least one sensor (S, S1, S2, S3) for determining the position of the vehicle - that is to say the direction and orientation of the vehicle in the horizontal plane of the terrestrial reference system and/or the lengthwise or transverse inclination of the vehicle relative to the vertical direction of the reference system - ,
wherein at least one vehicle-specific base conversion parameter ($X_{P0}$-$X_{A0}$, $Y_{P0}$-$Y_{A0}$, $Z_{P0}$-$Z_{A0+}$, $\varphi_0$, $\alpha_0$, $\beta_0$, $d_1$, $d_2$, $d_3$) can be stored in a memory of the evaluation unit (AWE) or another member arranged on the vehicle or working implement for a given distinct position of the vehicle - preferably the longitudinal direction of the vehicle in the N-S direction with the front side towards the North and without a lengthwise or transverse inclination of the vehicle - , and wherein
the sensor or sensors detects or detect at least one deviation ($\varphi$, $\alpha$, $\beta$) of the position from the directed zero position,

**characterised in that** the evaluation unit (AWE), on the basis of said deviation ($\varphi$, $\alpha$, $\beta$) and having regard to at least one vehicle-specific base conversion parameter ($\varphi_0$, $\alpha_0$, $\beta_0$, $d_1$, $d_2$, $d_3$) respectively determines the current conversion parameter for determining the co-ordinates ($X_P$, $Y_P$, $Z_P$) of the reference point which is spatially spaced from the satellite receiving unit from the known positional co-ordinates ($X_A$, $Y_A$, $Z_A$) of the satellite receiving unit.

2. An agricultural vehicle or working implement according to claim 1 **characterised in that** the evaluation unit (AWE) ascertains a transformation matrix from the conversion parameters and with said transformation matrix ascertains the position vector ($X_P$, $Y_P$, $Z_P$) of the reference point from the known position vector ($X_A$, $Y_A$, $Z_A$) of the satellite receiving unit.

3. An agricultural vehicle or working implement according to at least one of claims 1 and 2 **characterised in that** a direction sensor such as for example a compass is provided as the sensor (S1) for determining the orientation ($\varphi$) of the vehicle in the horizontal plane of the terrestrial reference system.

4. An agricultural vehicle or working implement according to at least one of the preceding claims **characterised in that** an inclination sensor such as for example a plumb pendulum with an electrical signal generator is provided as a sensor (S2) for determining the lengthwise inclination ($\alpha$) of the vehicle relative to the vertical direction of the terrestrial reference system.

5. An agricultural vehicle or working implement according to at least one of the preceding claims **characterised in that** an inclination sensor such as for example a plumb pendulum with an electrical signal generator is provided as a sensor (S3) for determining the transverse inclination ($\beta$) of the vehicle relative to the vertical direction of the terrestrial reference system.

6. An agricultural vehicle or working implement according to at least one of claims 1 and 2 **characterised in that** there is provided a sensor (S) for determining the orientation ($\varphi$) of the vehicle in the horizontal plane of the terrestrial reference system and for determining the lengthwise inclination ($\alpha$) or the transverse inclination ($\beta$) respectively of the vehicle relative to the vertical direction of the terrestrial reference system.

7. An agricultural vehicle or working implement according to one of the preceding claims **characterised in that** a reference line comprising two or more reference points can be determined.

8. An agricultural vehicle or working implement according to one of the preceding claims **characterised in that** a reference surface comprising three or more reference points can be determined.

9. An agricultural vehicle or working implement according to one of the preceding claims **characterised in that** a reference volume comprising three or more reference points can be determined.

10. An agricultural vehicle or working implement according to one of the preceding claims **characterised in that** at least one working parameter of a working implement mounted to or towed by the vehicle is taken into account by the evaluation unit (AWE) so that the position of the virtual reference point relative to the satellite receiving unit can be calculated in dependence on said working parameter.

11. An agricultural vehicle or working implement according to one of the preceding claims **characterised in that** the evaluation unit (AWE) takes account of the speed of travel of the vehicle in determining a virtual reference point so that the position of the virtual reference point relative to the satellite receiving unit can be dynamically regulated in dependence on the speed of travel.

12. An agricultural vehicle or working implement according to one of the preceding claims **characterised in that** individual reference points can be deactivated or activated respectively by the operator of the vehicle or automatically by the working process.

13. A method of determining position for an agricultural vehicle or working implement which has a satellite receiving unit for determining position in the three-dimensional terrestrial reference system, wherein the agricultural vehicle or working implement has an evaluation unit (AWE) which, from the data received from the satellite receiving unit, determines the absolute position of at least one reference point which is spatially separated from the location of the satellite receiving unit, wherein the spatial distance (D) between the satellite receiving unit and the reference point is quantitatively known, wherein the position of the vehicle or the working implement - that is to say the direction and orientation of the vehicle in the horizontal plane of the terrestrial reference system and the lengthwise or transverse inclination of the vehicle relative to the vertical direction of the reference system - is determined by at least one sensor (S, S1, S2, S3),wherein vehicle-specific base conversion parameters ($X_{P0}$-$X_{A0}$, $Y_{P0}$-$Y_{A0}$, $Z_{P0}$-$Z_{A0+}$, $\varphi_0$, $\alpha_0$, $\beta_0$, $d_1$, $d_2$, $d_3$) can be stored in a memory of the evaluation unit (AWE) or another member arranged on the vehicle for a given directed position of the vehicle - preferably the longitudinal direction of the vehicle in the N-S direction with the front side towards the North and no lengthwise or transverse inclination of the vehicle - , and wherein the sensor or sensors detects or detect a deviation ($\varphi$, $\alpha$, $\beta$) of the position from the directed zero position, **characterised in that** the evaluation unit (AWE), on the basis of said deviation ($\varphi$, $\alpha$, $\beta$) and having regard to the vehicle-specific base conversion parameters ($\varphi_0$, $\alpha_0$, $\beta_0$, $d_1$, $d_2$, $d_3$) respectively determines the current conversion parameter for determining the co-ordinates ($X_P$, $Y_P$, $Z_P$) of the reference point which is spatially spaced from the satellite receiving unit from the known positional co-ordinates ($X_A$, $Y_A$, $Z_A$) of the satellite receiving unit.

**14.** A method for positional determination for an agricultural vehicle or working implement according to claim 13 **characterised in that** the evaluation unit (AWE) ascertains a transformation matrix from the conversion parameters and with said transformation matrix ascertains the position vector ($X_P$, $Y_P$, $Z_P$) of the reference point from the known position vector ($X_A$, $Y_A$, $Z_A$) of the satellite receiving unit.

## Revendications

**1.** Véhicule agricole ou outil agricole équipé d'une unité de réception satellite pour la détermination de la position dans le système de référence terrestre tridimensionnel,

- le véhicule agricole ou l'outil comportant une unité de traitement (AWE) qui, à partir des données reçues de l'unité de réception satellite, détermine la position absolue d'au moins un point de référence séparé dans l'espace du lieu de l'unité de réception satellite,
- la distance (D) dans l'espace entre l'unité de réception satellite et le point de référence étant connue en valeur,
- au moins un capteur (S, S1, S2, S3) pour la détermination de la position du véhicule - c'est-à-dire du positionnement et de l'orientation du véhicule dans le plan horizontal du système de référence terrestre et/ou de l'inclinaison longitudinale et transversale du véhicule par rapport à la direction verticale du système de référence - étant prévu,
- au moins une grandeur de conversion de base ($X_{P0}$, $X_{A0}$, $Y_{P0}$, $Y_{A0}$, $Z_{P0}$, $Z_{A0}$, $\phi_0$, $\alpha_0$, $\beta_0$, $d_1$, $d_2$, $d_3$) spécifique au véhicule pouvant être mémorisée dans une mémoire de l'unité de traitement (AWE) ou dans une mémoire autre disposée sur le véhicule ou sur l'outil pour une position repérée donnée du véhicule - de préférence la direction longitudinale du véhicule dans la direction N-S, avec l'avant tournée vers le nord et sans inclinaison longitudinale ou transversale du véhicule -,
- et le capteur (les capteurs) détectant au moins un écart ($\phi$, $\alpha$, $\beta$) de la position par rapport à la position zéro,

**caractérisé en ce que**,

- sur la base de cet écart ($\phi$, $\alpha$, $\beta$) et en tenant compte d'au moins une grandeur de conversion de base ($\phi_0$, $\alpha_0$, $\beta_0$, $d_1$, $d_2$, $d_3$) spécifique au véhicule, l'unité de traitement (AWE) calcule la grandeur de conversion actuelle pour la détermination des coordonnées ($X_P$, $Y_P$, $Z_P$) du point de référence éloigné dans l'espace de l'unité de réception satellite à partir des coordonnées de position ($X_A$, $Y_A$, $Z_A$) connues de l'unité de réception satellite,
- le point de référence, en tant que point de référence virtuel, étant situé en dehors du véhicule et en dehors de l'outil.

**2.** Véhicule agricole ou outil agricole selon la revendication 1, **caractérisé en ce que** l'unité de traitement détermine à partir des grandeurs de conversion une matrice de transformation, et, avec cette matrice de transformation, détermine le vecteur de position ($X_P$, $Y_P$, $Z_P$) du point de référence sur la base du vecteur de position ($X_A$, $Y_A$, $Z_A$) connu de l'unité de réception satellite.

**3.** Véhicule agricole ou outil agricole selon au moins une des revendications 1 et 2, **caractérisé en ce qu'**il est prévu un détecteur de direction, tel que par exemple un compas, comme capteur (S1) pour déterminer l'orientation ($\phi$) du véhicule dans le plan horizontal du système de référence terrestre.

**4.** Véhicule agricole ou outil agricole selon au moins une des revendications précédentes, **caractérisé en ce qu'**il est prévu un détecteur d'inclinaison, tel que par exemple un pendule avec un transmetteur de signal électrique, comme capteur (S2) pour déterminer l'inclinaison longitudinale ($\alpha$) du véhicule par rapport à la direction verticale du système de référence terrestre.

5. Véhicule agricole ou outil agricole selon au moins une des revendications précédentes, **caractérisé en ce qu'**il est prévu un détecteur d'inclinaison, tel que par exemple un pendule avec un transmetteur de signal électrique, comme capteur (S3) pour déterminer l'inclinaison transversale ($\beta$) du véhicule par rapport à la direction verticale du système de référence terrestre.

6. Véhicule agricole ou outil agricole selon au moins une des revendications 1 et 2, **caractérisé en ce qu'**il est prévu un capteur (S) pour déterminer l'orientation ($\phi$) du véhicule dans le plan horizontal du système de référence terrestre ainsi que l'inclinaison longitudinale ($\alpha$) voire l'inclinaison transversale ($\beta$) du véhicule par rapport à la direction verticale du système de référence terrestre.

7. Véhicule agricole ou outil agricole selon une des revendications précédentes, **caractérisé en ce qu'**une ligne de référence définie par deux points de référence ou plus peut être déterminée.

8. Véhicule agricole ou outil agricole selon une des revendications précédentes, **caractérisé en ce qu'**une surface de référence définie par trois points de référence ou plus peut être déterminée.

9. Véhicule agricole ou outil agricole selon une des revendications précédentes, **caractérisé en ce qu'**un volume de référence défini par trois points de référence ou plus peut être déterminé.

10. Véhicule agricole ou outil agricole selon une des revendications précédentes, **caractérisé en ce qu'**au moins un paramètre de travail d'un outil monté sur le véhicule ou tracté est pris en compte par l'unité de traitement (AWE), de sorte que la position du point de référence virtuel par rapport à l'unité de réception satellite peut être calculée en fonction de ce paramètre de travail.

11. Véhicule agricole ou outil agricole selon une des revendications précédentes, **caractérisé en ce que** l'unité de traitement (AWE) prend en compte la vitesse du véhicule dans la détermination d'un point de référence virtuel, de sorte que la position du point de référence virtuel par rapport à l'unité de réception satellite peut être réglée dynamiquement en fonction de la vitesse du véhicule.

12. Véhicule agricole ou outil agricole selon une des revendications précédentes, **caractérisé en ce que** différents points de référence peuvent être désactivés ou activés par l'utilisateur ou de manière automatique par le processus de travail.

13. Procédé de détermination de la position pour un véhicule agricole ou un outil agricole équipé d'une unité de réception satellite pour la détermination de la position dans un système de référence terrestre tridimensionnel,

   • le véhicule ou l'outil agricole comportant une unité de traitement (AWE) qui, à partir des données reçues de l'unité de réception satellite, détermine la position absolue d'au moins un point de référence séparé dans l'espace du lieu de l'unité de réception satellite,
   • la distance (D) dans l'espace entre l'unité de réception satellite et le point de référence étant connue en valeur,
   • au moins un capteur (S, S1, S2, S3) pour la détermination de la position du véhicule - c'est-à-dire du positionnement et de l'orientation du véhicule dans le plan horizontal du système de référence terrestre et/ou de l'inclinaison longitudinale et transversale du véhicule par rapport à la direction verticale du système de référence - étant prévu,
   • des grandeurs de conversion de base ($X_{P0}$, $X_{A0}$, $Y_{P0}$, $Y_{A0}$, $Z_{P0}$, $Z_{A0}$, $\phi_0$, $\alpha_0$, $\beta_0$, $d_1$, $d_2$, $d_3$) spécifiques au véhicule étant mémorisées dans une mémoire de l'unité de traitement (AWE) ou dans une autre mémoire disposée sur le véhicule ou sur l'outil, pour une position repérée donnée du véhicule - de préférence la direction longitudinale du véhicule dans la direction N-S, avec l'avant tournée vers le nord et sans inclinaison longitudinale ou transversale du véhicule -, et
   • le capteur (les capteurs) détectant au moins un écart ($\phi$, $\alpha$, $\beta$) de la position par rapport à la position zéro,

**caractérisé en ce que**,

   • sur la base de cet écart ($\phi$, $\alpha$, $\beta$) et en tenant compte de la grandeur de conversion de base ($\phi_0$, $\alpha_0$, $\beta_0$, $d_1$, $d_2$, $d_3$) spécifique au véhicule, l'unité de traitement (AWE) calcule la grandeur de conversion actuelle pour la détermination des coordonnées ($X_P$, $Y_P$, $Z_P$) du point de référence éloigné dans l'espace de l'unité de réception satellite sur la base des coordonnées de position ($X_A$, $Y_A$, $Z_A$) connues de l'unité de réception satellite,
• le point de référence, en tant que point de référence virtuel, étant situé en dehors du véhicule et en dehors de l'outil.

14. Procédé de détermination de la position pour un véhicule agricole ou un outil agricole selon la revendication 13, **caractérisé en ce que** l'unité de traitement (AWE) détermine à partir des grandeurs de conversion une matrice de transformation, et, avec cette matrice de transformation, détermine le vecteur de position ($X_P$, $Y_P$, $Z_P$) du point de référence sur la base du vecteur de position ($X_A$, $Y_A$, $Z_A$) connu de l'unité de réception satellite.

EP 0 970 595 B2

$$\underline{\text{Fig.1}}$$

N

W ←→ O

S

$y_A + \Delta y \ (= 5 \text{ m})$

$\Delta y = d_1 \cdot \cos(\varphi_0)$

Referenzpunkt

$d_1$

$\varphi_0$

$y_{A_0}$

GPS-Antenne

$\Delta x = d_1 \cdot \sin(\varphi_0)$

$x_{A_0}$

$x_A + \Delta x \ (= 3,5 \text{ m})$

X

Y

## Fig.2

$$\Delta y = d_1 \cdot \cos (\varphi_0 - \varphi)$$

$$\Delta x = d_1 \cdot \sin (\varphi_0 - \varphi)$$

**Fig.3**

**Fig.4**

**Fig.5**

$\Delta z = d_3 \cdot \cos(\beta_0)$

$\Delta x = d_3 \cdot \sin(\beta_0)$

**Fig.6**

$\Delta z = d_3 \cdot \cos(\beta_0 + \beta)$

$\Delta x = d_3 \cdot \sin(\beta_0 + \beta)$

**Fig.7**

Referenz-Arbeitsfläche/
„Virtuelle Arbeitsfläche"

GPS-Antenne

**Fig.8**

GPS-Antenne

Lage des Referenzpunktes (Virtuelle Position)
bei einer Fahrgeschwindigkeit v₀.

**Fig.9**

GPS-Antenne

Lage des Referenzpunktes (Virtuelle Position)
bei einer Fahrgeschwindigkeit 1,5 v₀.

**Fig.10**

GPS-
Antenne

1. Referenzpunkt/
„Virtuelle Bezugsposition"

2. Referenzpunkt/
„Virtuelle Bezugsposition"

# Fig.11

Kompaß     Querneigungs-Sensor     Längsneigungs-Sensor

Position der
GPS-Antenne     Auswerteeinheit     Fahrgeschwindigkeit

Position des Referenzpunktes     fahrzeugspezifische
Basisumrechnungsgrößen

**Fig.12**